# EUROPEAN PATENT APPLICATION

(11) **EP 2 241 955 A1**
(43) Date of publication of application: **20.10.2010**
(21) Application number: 09158033.2
(22) Date of filing: 16.04.2009
(51) Int. Cl.: G06F 3/01, G06F 3/041

(54) **Electronic touch screen device**

(71) Applicant: CN Innovations limited, Hong Kong (CN)
(72) Inventor: Knudsen, Peter Bach, 1365, Copenhagen K (DK)
(74) Representative: Schwarze, Holm

(57) **Abstract**

Disclosed is an electronic device comprising: a touch screen (403) configured for presenting information to a user and for receiving input controlled by the user; at least one touch sensor (403) configured for detecting the position of at least one touch action (405,406) made by the user on the touch screen (403); at least two force sensors (407,408,409,410) configured for detecting at least one pressure action made by the user on the touch screen subsequent to the at least one touch action (405,406), and where the at least one pressure action is registered as an input to the electronic device; and a processing unit configured for calculating which of a position of a first touch action (405), of the at least one touch action, and a position of a second touch action (406), of the at least one touch action, that a first pressure action, of the at least one pressure action, corresponds to, if the first touch action and the second touch action are present at the touch screen substantially simultaneously, and the first pressure action is detected subsequently; and the processing unit is furthermore configured to deduce which input to register in the electronic device based on the first pressure action.

## Description

### Field of the invention

This invention generally relates to an electronic device. More particularly, the invention relates to an electronic device comprising a touch screen.

### Background of the invention

A touch screen is a display which can detect the presence and location of a touch within the display area. Touch or contact to the display of a device can generally be made by means of a finger.

A touch screen enables the user to interact with what is displayed directly on the screen, where it is displayed, rather than indirectly with a mouse or touchpad. Furthermore, the interaction can be performed without using any intermediate device, such as a stylus that needs to be held in the hand.

Touch screen displays can be used in digital appliances, such as mobile phones, personal digital assistants, satellite navigation devices, or they can be attached to computers, or as terminals, to networks.

The key principles when building a touch screen are to recognize a finger touching a display, to interpret the command that this represents, and to communicate the command to the appropriate application. Thus, the system determines the intended command based on the controls showing on the screen at the time and the potation of the touch.

In the manufacture techniques called the capacitive or resistive approach, the screen is coated with a thin, transparent metallic layer, and when a user touches the surface, the system records the change in the electrical current that flows through the display.

In the dispersive-signal technique, the generation of voltage when mechanical force is applied to a material, i.e. the piezoelectric effect, which occurs chemically when a strengthened glass substrate is touched, is measured.

In the infrared-based techniques, an array of sensors detects a finger touching or nearly touching the display, whereby light beams projected above the screen is interrupted, or bottom-mounted infrared cameras record screen touches.

With multi-point touch screens, the tracking of more than one finger on the screen can be performed, and thus operations where more than one finger is required are possible, or more users can interact with the touch screen simultaneously.

Multi-touch consists of a touch screen and software that recognizes multiple simultaneous touch points, as opposed to the standard touch screen which recognizes only one touch point.

US5376948A discloses a method of and apparatus for determination of touch location on a display screen or the like or other surface embodying a force-sensing platform or surface supporting or otherwise externally contacting the display screen monitor apparatus, and responding to the forces created by the thrust of touching a point of the display screen, to sense and calculate the location of the touching point. The underlying technique employs force-sensing means responsive to all six degrees of freedom of applied (touching) force and torque, achieving force location away from the plane of the sensors and in spite of tangential force components by calculating the point of least magnitude of the three-dimensional torque vector from among all points within the screen or surface, and outputting this point as an estimate of the intersection point of the screen or surface with the thrust line of the touching or other contact force.

US2008078590A discloses a pointing device apparatus using capacitance sensor and methods for determining a deflection of a moveable conductive plate that is moved over a capacitive sensing device. The method may include moving the moveable conductive plate over sensor elements of the capacitive sensing device, and determining the deflection of the moveable conductive plate. In determining the deflection, a deflection magnitude and a deflection direction may be determined by calculating a vector of x- and y-directions or a vector of a radius and an angle.

US2008202824A discloses a control panel for controlling a device in response to user indications, the control panel comprising, a position sensing element having a sensing surface, and a position interface circuit. The position interface circuit is operable to determine a position of an object on the sensing surface, when the object is applied to the sensing surface of the position sensing element. At least one pressure sensing device and the sensing surface of the position sensing element are arranged with the effect that a displacement of the sensing surface with respect to the pressure sensing device in response to the pressure applied by the object is detectable by the pressure sensing device. The invention relates to a control panel having both touch sensitive and mechanical input means, such as conventional push bottoms.

US2006279548A discloses touch location determination approaches involving a plurality of touch location techniques. Each touch location technique is capable of independently determining a location of a touch within a touch area of the touch sensitive device. The touch location determination made by at least one touch location technique is enhanced using touch location information associated with the touch acquired from one or more other touch location techniques. One touch location technique may use a different type of sensor, signal, and/or algorithm from the one or more other touch location techniques.

US2006244733A discloses a touch device using pre-touch sensing to enhance touch location determination and/or to activate various processes. Pre-touch signals are generated by one or more pre-touch sensors responsive to a touch implement hovering above the touch surface. The pre-touch signals indicate a pre-touch location of the touch implement. One or more touch sensors generate touch signals responsive to a touch by the touch implement on the touch surface. The touch signals indicate a touch location of the touch implement. A controller determines a touch location based on the pre-touch signals and the touch signals. Activation and/or deactivation of various processes may be triggered based on information acquired from the pre-touch and/or touch sensors.

US2003206162A discloses an approach for accurately determining touch location on a touch screen. According to one aspect, a touch signal shape may be correlated with a level of touch-induced touch signal error present in the touch signal. The touch signal shape is associated with a preferred time for obtaining touch signal information to determine the touch location. Touch signal location information is acquired in response to detecting the touch signal shape in the touch signal. The location of the touch is determined from the acquired touch signal information.

US2002149571A discloses a force sensor for sensing a touch force applied to a touch surface. The force sensor includes: a first element including an elastic element and a first capacitor plate having a first capacitive surface, the elastic element including at least part of the first capacitor plate; and a second element including a second capacitor plate opposed to the first capacitor plate; wherein transmission of at least part of the touch force through the elastic element contributes to a change in capacitance between the first capacitor plate and the second capacitor plate. The elastic element and the first capacitor plate may be integral.

It remains a problem to improve the functionality of touch screens for multi-touch purposes.

### Summary

Disclosed is an electronic device comprising:
- a touch screen configured for presenting information to a user and for receiving input controlled by the user;
- at least one touch sensor configured for detecting the position of at least one touch action made by the user on the touch screen;
- at least two force sensors configured for detecting at least one pressure action made by the user on the touch screen subsequent to the at least one touch action, and where the at least one pressure action is registered as an input to the electronic device; and
- a processing unit configured for calculating which of a position of a first touch action, of the at least one touch action, and a position of a second touch action, of the at least one touch action, that a first pressure action, of the at least one pressure action, corresponds to, if the first touch action and the second touch action are present at the touch screen substantially simultaneously, and the first pressure action is detected subsequently; and the processing unit is furthermore configured to deduce which input to register in the electronic device based on the first pressure action.

Consequently, it is an advantage that the electronic touch screen device provides multi-force sensing for multi-touch input, because the device is able to distinguish and differentiate between different pressure actions originating from or caused by different touch actions, when the touch actions are applied simultaneously or almost simultaneously on the touch screen.

It is an advantage that the touch sensor is not used to create input but only to detect where the user is touching the screen, i.e. where the user intents to make input. When the user wants to make an input he/she will apply pressure to the screen, like when pressing a real key on a keyboard or keypad. The force sensors will detect the increased pressure and read this as input. By combining the information from the touch sensor with the information from the force sensors it is possible to calculate and/or interpolate, where on the screen the input is made.

It is an advantage that by using at least two force sensors, such as e.g. two or four force sensors, the processor can calculate where on the screen the pressure is made. This is useful if the user is touching the touch sensor of the touch screen with more than one finger at the same time.
The resolution of the force sensors may not be as good as the resolution of the touch sensor, and therefore the information from the touch sensor is useful for obtaining correct input detection on high resolution electronic input devices.

It is an advantage that by providing two or more force sensors it is possible to read or differentiate between more fingers or objects touching the touch sensor at the same time. Thus it is an advantage that it is possible to calculate the specific force applied to the touch sensor from each of the fingers applying pressure or force.

Thus by reading the different pressure levels of each of the at least two force sensors, it can be calculated which of the touching fingers that is making the input to the electronic device.
Thus it is an advantage that by using this multi-force sensing, the user can touch the screen with more than one finger and make input by means of applying a pressure at the same time.

It is an advantage that the user can use two hands and thus e.g. two fingers or a hand and a pen, such as a stylus for providing input, and thus the device is particularly useful if the device is a computer keyboard, where the user uses two hands for providing input to the screen, or if the device is a handheld device, such as a mobile phone, PDA, computer game console etc.

When holding a touch screen device with both hands in e.g. a relaxed and ergonomically correct way, it is hard not to touch the screen in more than one place at the time. Thus it is an advantage that the touch sensor is used as a location or position sensor, and not as an input sensor, since this allows the user to rest hands and fingers on the touch screen without given accidental input.

It is an advantage that the user can provide desired input, e.g. text, to the electronic device by performing pressure actions with one finger, while resting another finger on the screen, i.e. performing a touch action, without thereby providing input to the electronic device. Thus it is an advantage that providing inadvertent input can be avoided by just avoiding applying pressure to the screen, i.e. avoiding performing a pressure action, but still resting or holding a hand or finger on the screen, i.e. providing a touch action.

Thus it an advantage that when using multi-touch sensing, the processor of the electronic device can calculate what is intended as input and what is not.

It is an advantage that the touch sensor only senses and detects the location of the fingers on the screen, and that the touch sensor is not used as input sensor, since then the sensitivity of the touch sensor can be set to be very sensitive. This means that the touch sensor besides functioning as a position sensor, also can function as a proximity sensor as well.

Furthermore, it is advantage to have at least two force sensors in the electronic device, since two force sensors are sufficient, if the user performs a touch action and e.g. a pressure action, and then lifts the finger from the screen before applying a next touch action and e.g. pressure action with the same finger. However, if the user performs a touch action and e.g. a pressure action, and then does not lift the finger before applying a next touch action and e.g. pressure action, then four force sensors should be provided in the electronic device.

It is an advantage that besides being suitable for handheld devices and computer keyboards as described above, multi-force sensing can also be used for computer games and other applications, such as for zooming, rotating graphics and the like.

The touch sensor is defined as being adapted to detect a touch action and the location of the touch action on the touch sensor. The force sensor is defined as being adapted to detect a pressure action, i.e. an application of pressure, such as a pressure change, e.g. an increase or decrease in the force applied to the touch sensor.

A pressure action can only occur after a touch action, thus a touch action will always precede a pressure action. However, a touch action can occur without a succeeding pressure action, since a pressure action will not always occur after a touch action. If a pressure action does not occur after a touch action, no input is registered in the electronic device.

A touch action is defined as an application of physical contact to the touch screen by e.g. a finger of the user, such as to strike or push lightly or gently, to be briefly in contact or conjunction, to lay or place or rest.

A pressure action is defined as an application of force to the touch screen by e.g. a finger of the user in direct contact with the touch screen, and more specifically the force exerted over a surface divided by its area, i.e. force per area.

In relation to prior art touch screen devices, it has not previously been described that a system can calculate a position of a pressure action made by a finger, when the touch screen is touched in two points at the same time by two fingers of a user. Some prior art devices comprises that a sensor works as both position determination and input detection, and thus these devices are only configured to be touched by one pointing means, either a finger or a pen, at a time, and these devices cannot read input, if the touch screen is touched at more than one point at the same time. Some prior art devices comprises that the system guesses the position of a pressure action based on a previously registered position of a touch action, but these devices can thus not handle this guessing when more than one touch action is registered simultaneously prior to the pressure action.

In some embodiments the touch screen is configured for presenting information by displaying a number of objects, where each object corresponds to an input controllable by the user.

In some embodiments a touch action corresponds to that the user rests a pointing means on the touch screen.

In some embodiments the first touch action corresponds to that the user rests a first pointing means on the touch screen, and where the second touch action corresponds to that user rests a second pointing means on the touch screen.

In some embodiments the pointing means is selected from the group consisting of:
- a finger of the user;
- a pen;
- a stylus.

In some embodiments the at least one pressure action comprises that the user increases the pressure on the touch screen.

In some embodiments the at least one pressure action comprises that the user decreases the pressure on the touch screen.

In some embodiments the at least one pressure action comprises a change in pressure by that the user first increases the pressure on the touch screen and subsequently decreases the pressure on the touch screen.

In some embodiments the position of the at least one touch action is defined by means of a x-position,̅ a y-position and a z-position in a coordinate system relative to the touch screen.
It is an advantage that the input interface is a 3-dimensional interface, since hereby input can be provided in both directions on the screen, e.g. the x-direction and the y-direction, as well as in a third direction, e.g. the z-direction, in space. The third direction corresponds to a direction being perpendicular to both the x-direction and the y-direction, and thus the third directions corresponds to a direction down into or up from the screen, i.e. a direction perpendicular to the 2-dimensonal screen, and this corresponds to performing a touch action and/or a pressure action, i.e. pressing, on the screen. Depending on how much pressure a user applies to the screen in a pressure action, the input to the electronic device varies. For example, a moderate pressure may correspond to a level 4 on a pressure scale in the touch screen, whereas a maximum pressure may correspond to a level 9 on the pressure scale.

In some embodiments the touch sensor is selected from the group consisting of:
- a capacitive sensor;
- a resistive sensor;
- an acoustic wave sensor;
- a surface acoustic wave (SAW) sensor;
- a projected capacitance sensor;
- an infrared sensor;
- a piezo electric sensor;
- a strain gauge;
- an optical imaging sensor;
- a dispersive signal technology sensor;
- an acoustic pulse recognition sensor.

In some embodiments the force sensors are selected from the group consisting of:
- resistive force sensors;
- capacitive sensors;
- semiconductor piezo-resistive sensors;
- strain gauge sensor;
- mechanical spring sensor;
- pressure sensors.

In some embodiments the electronic device is selected from the group consisting of:
- a mobile phone;
- a computer;
- a handheld computer;
- a computer keyboard;
- a game console;
- a kiosk system;
- a point of sale system;
- an ATM;
- a PDAs;
- a smart phone;
- an in-car computer;
- an in-car navigation;
- a GPS;
- a portable media player;
- a home entertainment system;
- a home appliance;
- a flight navigation system;
- a portable music player.

In some embodiments if a second pressure action of the at least one pressure action is detected subsequently, the processing unit calculates which of the position of the first touch action and the position of the second touch action the second pressure action corresponds to; and the processing unit deduces which input to register in the electronic device based on the second pressure action.

In some embodiments if a second pressure action of the at least one pressure action is detected simultaneously with the first pressure action, the processing unit in the electronic device calculates which of the position of the first touch action and the position of the second touch action the second pressure action corresponds to; and the processing unit deduces which input to register in the electronic device based on the second pressure action.

In some embodiments the processing unit calculates a force level of the at least one pressure action.
It is an advantage that depending on how much pressure a user applies to the screen in a pressure action, the input command to the electronic device varies. For example, a moderate pressure may correspond to a force level 4 on a pressure scale in the touch screen, whereas a maximum pressure may correspond to a force level 9 on the pressure scale.
It is a further advantage that by means of providing different force levels, the touch screen can be used to navigate in three-dimensions, where the screen displays a three-dimensional image or tunnel into which the user can enter visually by means of providing a pressure action and adjusting the force level of the pressure action so that it corresponds to a desired input.

In some embodiments the processing unit calculates a force level of each of the respective first and second pressure actions made simultaneously.

In some embodiments the device is configured for generating a user-detectable output in the form of a haptic feedback, and where the haptic feedback simulates the sensation of a mechanical keypad.
It is an advantage that the flat two-dimensional screen can be made to feel like a real mechanical keypad or keyboard by adding haptic feedback to the screen.

In some embodiments the device is configured for generating a user-detectable output in the form of a haptic feedback, and where the haptic feedback comprises providing a click-down sensation, when the pressure action is increased on the touch screen, and a click-up sensation, when the pressure action is decreased on the touch screen.
It is an advantage that the haptic feedback can be made to feel like a dome collapsing, e.g. providing an input by means of a pressure action causes a dome collapse, and releasing the pressure again causes the dome to return to its original state. The dome switch sensation can be provided by means of a piezoelectric motor.

In some embodiments the device is configured for generating a user-detectable output in the form of a haptic feedback, and where the haptic feedback is a sound wave motion adjusted to have its maximum amplitude at the position, where the pressure action is made.
It is an advantage that the haptic feedback can be made to be felt only by the finger making the input by means of the pressure action and not by another finger touching the screen but not making the input.

Thus the haptic feedback may be felt like a real mechanical key on a keypad, like a dome switch, or like a wave top. Alternatively and/or additionally, the haptic feedback may be felt like a knock on the screen, a vibration in the screen provided by a vibration motor, such as a piezoelectric motor, a waving or wave in the screen for stimulation e.g. when the user is scrolling on a page shown on the screen, and/or the like. The vibration may for example be a lateral vibration of the screen. Thus by means of the haptic feedback, the screen becomes a three-dimensional surface or a rolling or hilly surface.

In some embodiments the touch screen is made of a material selected from the group consisting of:
- glass;
- polymer.

The present invention relates to different aspects including the electronic device described above and in the following, and corresponding methods, devices, uses and/or product means, each yielding one or more of the benefits and advantages described in connection with the first mentioned aspect, and each having one or more embodiments corresponding to the embodiments described in connection with the first mentioned aspect and/or disclosed in the appended claims.

In particular, disclosed herein is a method of registering input in an electronic device comprising a touch screen configured for presenting information to a user and for receiving input controlled by the user, the method comprising the steps of:
- detecting, by means of at least one touch sensor, the position of at least one touch action made by the user on the touch screen;
- detecting, by at least two force sensors, at least one pressure action made by the user on the touch screen subsequent to the at least one touch action, where the at least one pressure action is registered as an input to the electronic device;
- calculating, by means of a processing unit, which of a first touch position and a second touch position a first pressure action corresponds to, if a first touch action and a second touch action are present at the touch screen substantially simultaneously, and the first pressure action is detected subsequently to the first and the second touch actions; and deducing, by means of the processing unit, which input to register in the electronic device based on the first pressure action.

In particular, disclosed herein is furthermore a computer program product comprising program code means for causing a data processing system to perform the method of claim 14, when the program code means are executed on the data processing system.

In particular, disclosed herein is furthermore a computer program product according to claim 14, comprising a computer-readable medium having stored thereon the program code means.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows a schematic example of the functionality of the electronic device.
Fig. 2 shows a schematic example of the force sensors used to detect an input from a pressure action.
Fig. 3 shows an example of a touch screen with touch sensor and force sensors.
Fig. 4 shows an example of position determination of a pressure action.
Fig. 5 shows an example of haptic feedback.
Fig. 6 shows an example of haptic feedback.
Fig. 7 shows an example of how haptic feedback can be provided.
Fig. 8 shows an example of an electronic touch screen device seen in side view.
Fig. 9 shows an example of a flowchart.
Fig. 10 shows an example of a flowchart.
Fig. 11 shows an example of a flowchart.

### Detailed description

In the following description, reference is made to the accompanying figures, which show by way of illustration how the invention may be practiced.

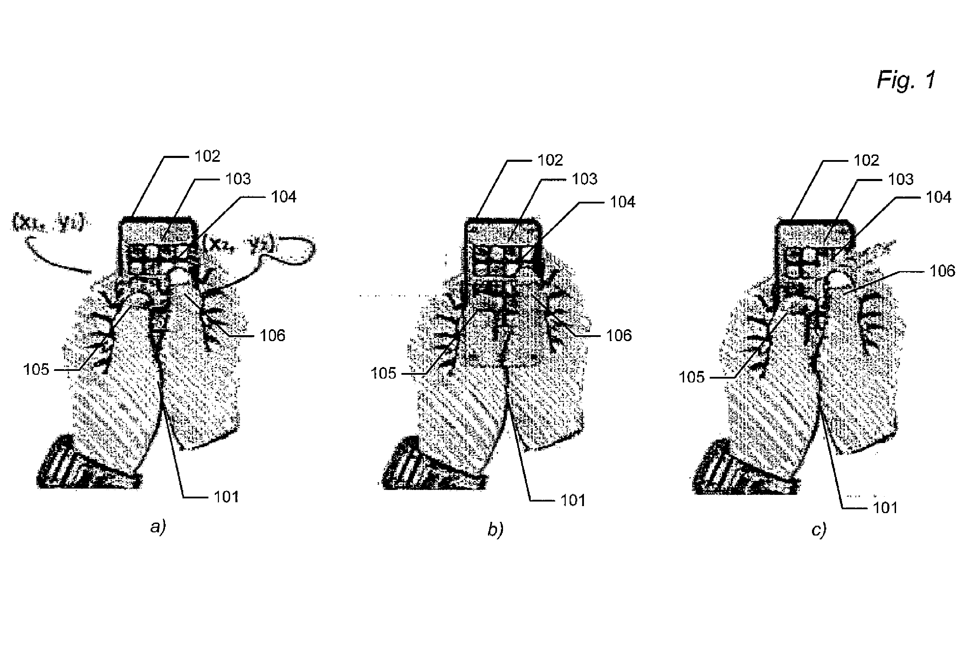

Figure 1 shows a schematic example of the functionality of the electronic device. The figure shows the hands 101 of a user holding an electronic device 102 comprising a touch screen 103. The touch screen displays a visual keypad 104.

In fig. 1a) the user rests two fingers 105 and 106 on the touch screen 103, whereby two touch actions are performed, and whereby the touch sensor in the electronic device 102 senses and detects the positions (x1,y1) and (x2,y2), respectively, of the resting fingers 105 and 106, respectively. The touch sensor may be a capacitive sensor. When the touch screen is touched, the electronic device may respond with gestures like graphic, light and/or vibrations in and on the screen.

In fig. 1b) the user applies a pressure to the touch screen 103, i.e. performs a pressure action, with one of his fingers 106, whereby force sensors in the electronic device 102 detects an input at the position (x2,y2) of the finger 106. The other finger 105 is still touching the touch screen 103. The force sensors may be resistive force sensors.

In fig. 1c) the electronic device 102 provides a haptic feedback to the user. The purpose of the haptic feedback may be to communicate to the user that his input has been registered. The haptic feedback may be felt like at dome collapsing under the finger 106 of the user, which was used to perform the pressure action and thus to provide the input. Together with the sensation of a dome collapsing, the electronic device may also provide a sound, such as click sound to the user for indicating to the user that his command in form of the pressure action has been received.

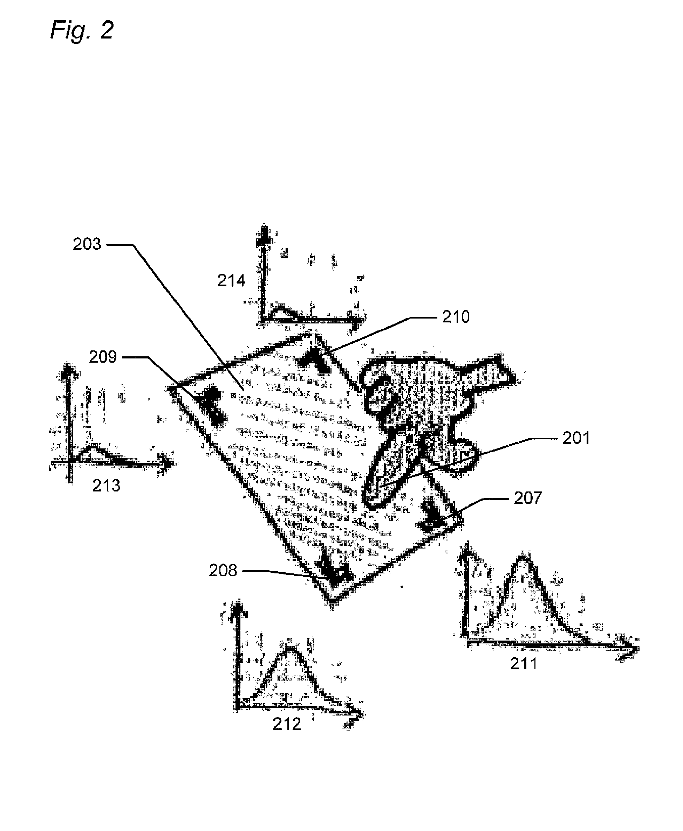

Fig. 2 shows a schematic example of the force sensors used to detect an input from a pressure action. The figure shows a user's finger 201 performing a pressure action on a touch screen 203. Four force sensors 207, 208, 209, 210 are shown, that is one force sensor in each of the corners of the touch screen. Four graphs 211, 212, 213, 214 are also shown, one graph at each corner of the touch screen. Each graph indicates the magnitude of the force detected at the corresponding force sensor. Thus the graph 211 shows the magnitude of the force from the finger 201 on force sensor 207, the graph 212 shows the magnitude of the force from the finger 201 on force sensor 208, the graph 213 shows the magnitude of the force from the finger 201 on force sensor 209, and the graph 214 shows the magnitude of the force from the finger 201 on force sensor 210.
As is seen in the figure, the position of the finger 201 on the touch screen is closest to force sensor 207 and thus graph 211 shows the highest magnitude of force of the four graphs. Thus by reading the different pressure levels of the four individual force sensors, it can be calculated which of the touching fingers that is making the input. A processor in the electronic device performs the calculation by means of a predefined software program code.

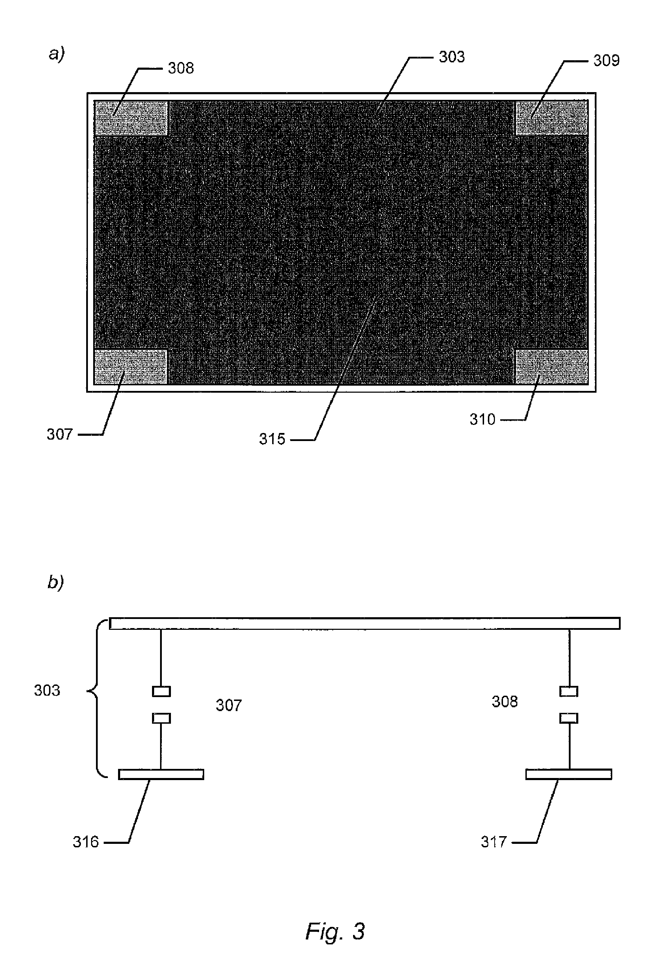

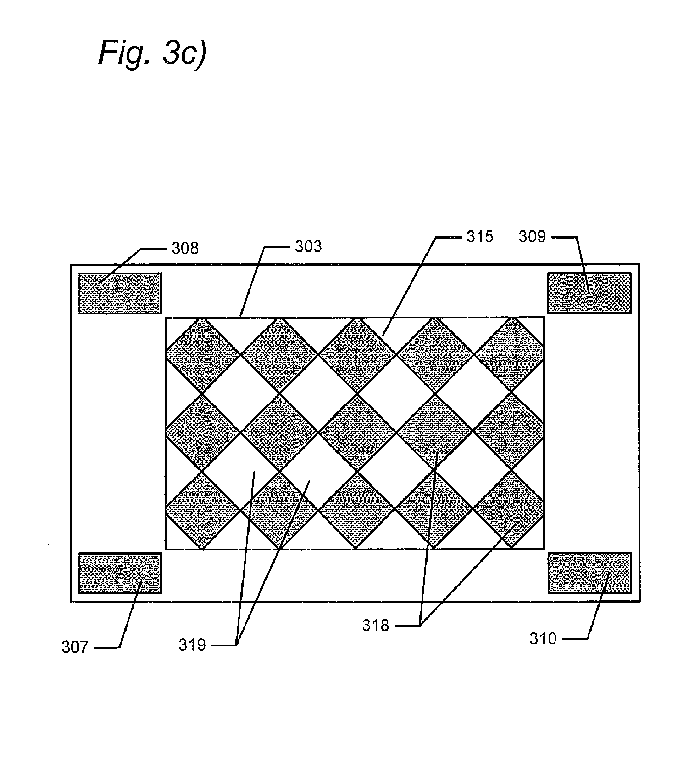

Fig. 3 shows an example of a touch screen with touch sensor and force sensors. In fig. 3a), a top view of a touch screen 303 in an electronic device is shown. Four force sensors 307, 308, 309, 310 are shown, one in each corner. A touch sensor 315 fills substantially the entire extent of the touch screen 303. The touch sensor 315 can be any kind of touch sensor. The touch sensor 315 can be made of two films layers which are glued, pasted, sticked, or adhered together. The two layers can be made of conductive material, e.g. an indium tin oxide (ITO) coating.

In fig. 3b) a side view of a touch screen 303 in an electronic device is shown. Two force sensors 307, 308 implemented as capacitive sensors are seen. The capacitance between the screen 303 and a fixed ground plate 316, 317 can be measured for obtaining a value for the force at each of the force sensors. It may be possible to use the same member/s or means for both the force sensors and the touch sensor, i.e. an integrated construction where the same physical and electronic parts are used for both force and touch sensing.

In fig. 3c) a top view of a touch screen 303 is seen. Four force sensors 307, 308, 309, 310 are shown, one in each corner. A touch sensor 315 is arranged in the centre of the touch screen 303. The touch sensor 315 can be any kind of touch sensor. The touch sensor 315 can be made of two films layers, which are both made of conductive material, e.g. an ITO coating. The ITO coating has a pattern, which can be made by means of a laser. Thus a partial removal of ITO by means of laser can be performed after the coating has been performed. Thus the touch sensor 316 comprises regions 318 of ITO coating and regions 319 where the ITO coating has been removed.

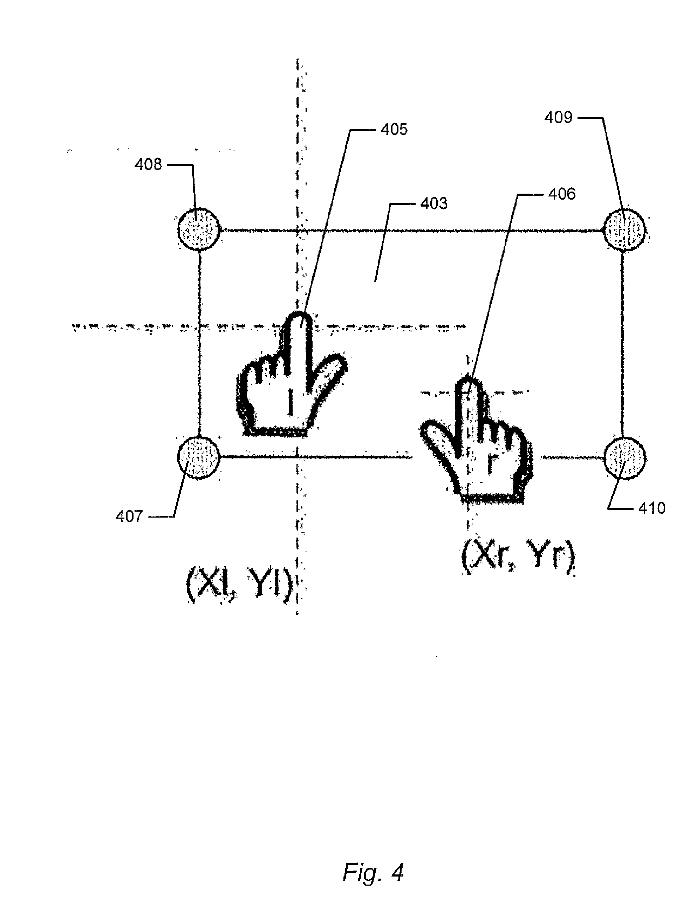

Fig. 4 shows an example of position determination of a pressure action. When a user is touching a touch screen 403 with two fingers 405, 406 the location or position (xl,yl) and (xr,yr) of each of the fingers 405 and 406, respectively, is read by means of a touch sensor. For example finger 405 is touching a letter "A" on the screen and finger 406 is touching a letter "B", but the touch sensor only registers the position of the fingers 405, 406, and not the content shown on the screen below the resting fingers. If the user now pushes on one of the letters on the screen with one of his fingers, i.e. performs a pressure action, the system uses a number of force sensors to interpolate which of the fingers that is pushing on the screen and thereby which of the letters "A" or "B" that is chosen as input to the electronic device. Thus the system determines whether it was finger 405 pressing on the letter "A" or finger 406 pressing on letter "B" causing the input.

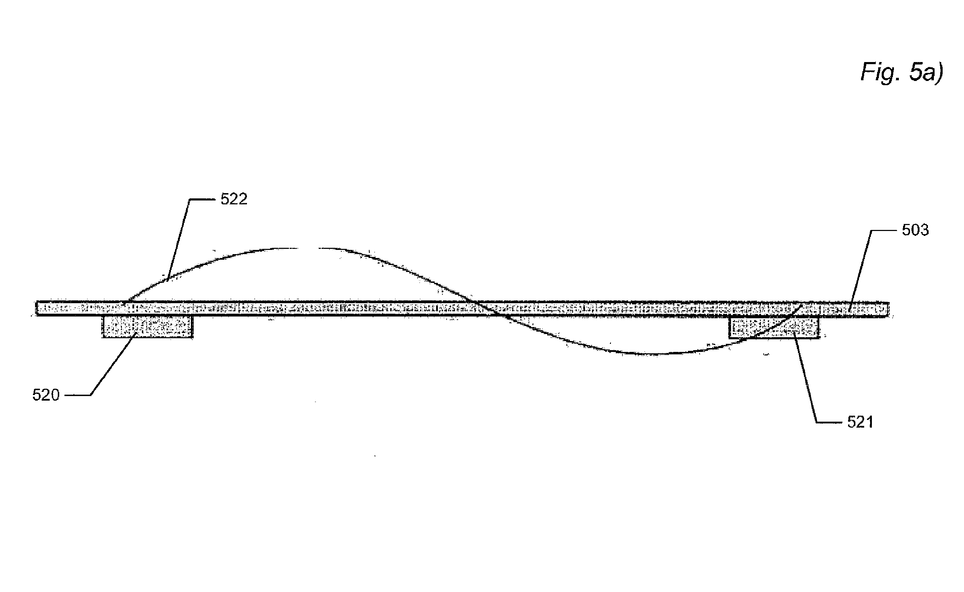

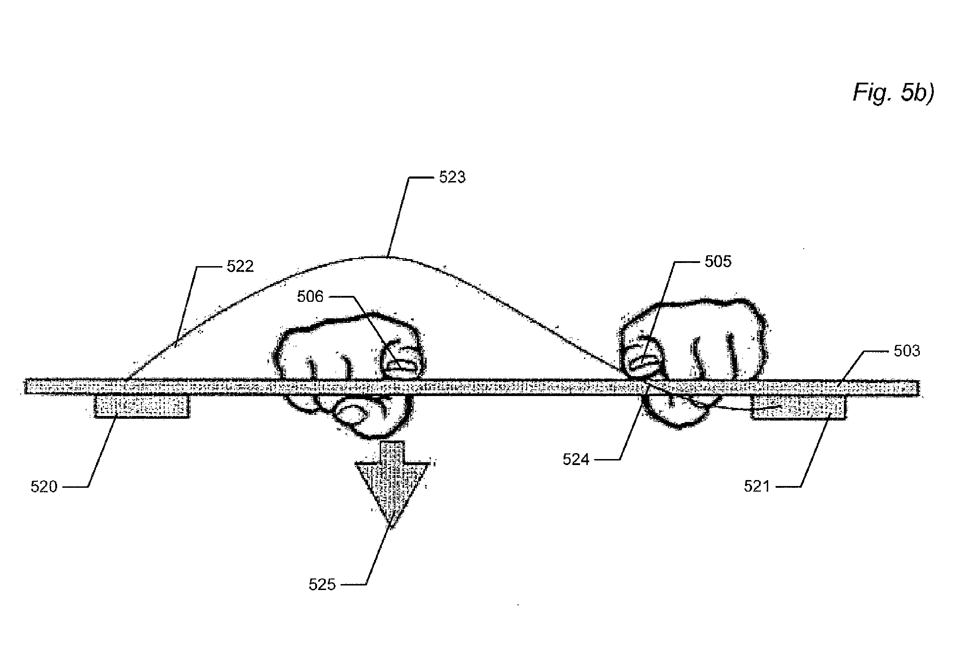

Fig. 5 shows an example of haptic feedback.
After the user has performed a pressure action for providing an input to the electronic device, the user may receive a haptic feedback from the electronic device, and the haptic feedback may be performed by means of a movement of the touch screen, which is adapted to be perceived or felt by the user through his finger/s.
In fig. 5a) it is seen that two piezoelectric elements 520, 521 are attached to a fixed frame (not shown) in the electronic device. When a sound wave 522 is created by means of the piezoelectric elements 520, 521, the touch screen 503, such as for example a glass panel, is set in motion, i.e. the touch screen performs a movement relative to the fixed frame, which is a haptic feedback to the user.

In fig. 5b) it is seen that the sound wave 522 may have such a shape that the top 523 of the wave is positioned on the screen 503 in the (x,y) position or point, where the user made the pressure action, indicated by an arrow 525, for providing the input with finger 506. Thus the sound wave is adjusted to peak at the point of input. Furthermore, it is seen that the point 524 of the wave which has zero height relative to the screen, i.e. the point which is neutral relative to the screen 503, is positioned on the screen 503 in the (x,y) position or point, where the user only touched the screen with finger 505 and not made any input. Thus the sound wave is adjusted to "die" at the point of touch that did not execute input.

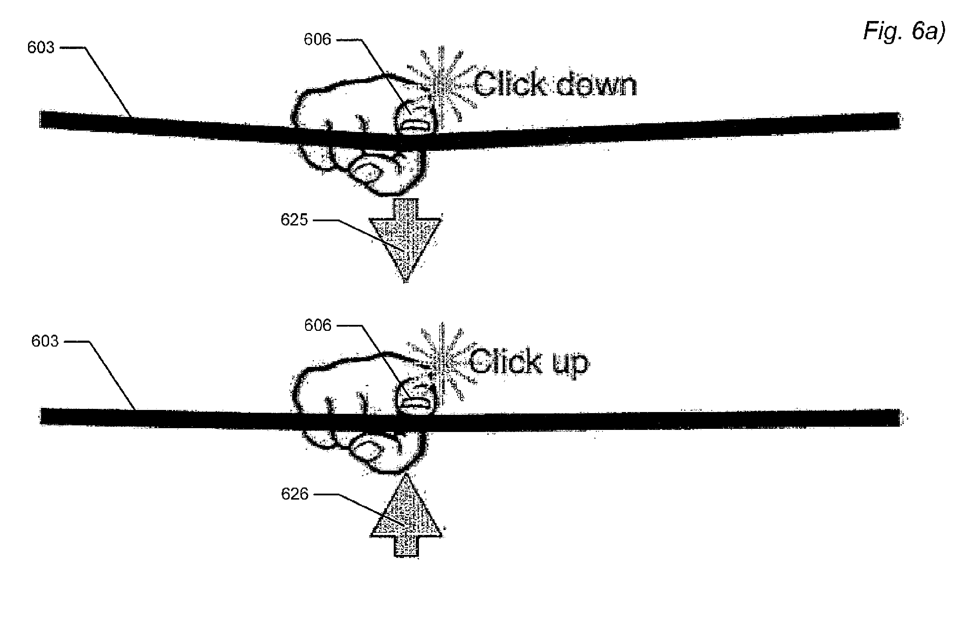

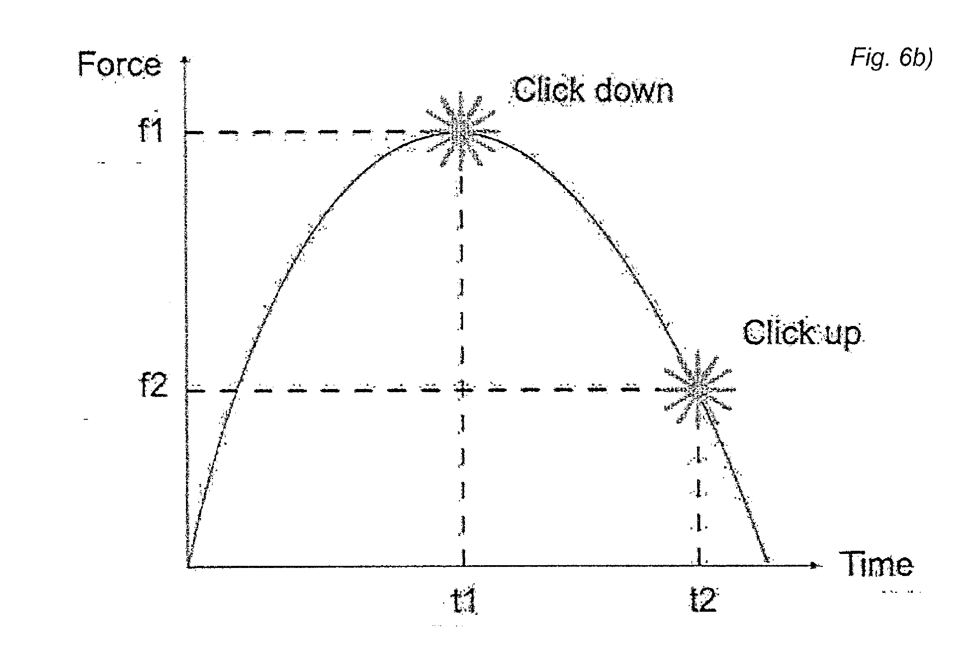

Fig. 6 shows an example of haptic feedback.
In the top part of fig. 6a) it is seen that the user performs a pressure action, indicated by arrow 625, on the touch screen 603 by means of finger 606. When the force, which the finger 606 is pressing with, reaches a level set to define input, the user feels a dome collapse or click in the screen 603 through his finger 606.
In the bottom part of fig. 6a) it is seen that the user releases the pressure, indicated by arrow 626, on the screen 603 by means of his finger 606. Upon release but while the user is still touching the screen 603, the user feels a dome release or release click in the screen 603 through his finger 606.
Thus by using force sensors to detect input, the haptic feedback can be designed to be felt like a real mechanical dome key.

Fig. 6b) is a graph illustrating the click feedback sequence shown in fig. 6a). The graph shows time on the x-axis and force on the y-axis. The maximum of the curve is at time t1 and force f1, which is the time at which the user presses on the touch screen with a force level set to define input. At time t1 and force f1, the user will thus feel a click down in the screen. At time t2 the user releases the pressure but still touches the screen with the finger, and the force is now f2. When the force is f2, the user will thus feel a click up in the screen.

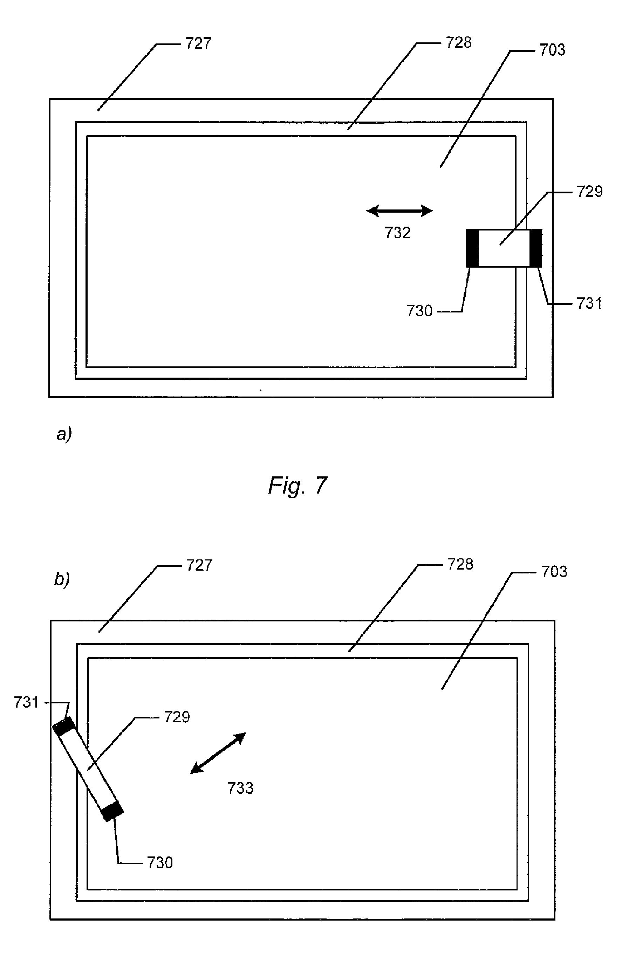

Fig. 7 shows an example of how haptic feedback can be provided.

Haptic feedback can be provided by means of vibration or a sound wave through the screen as seen in fig. 5. However, if the touch screen comprises a glass panel, it can be difficult to create a wave or vibration through the screen, because is glass can be a very inflexible material. Therefore the screen can instead be moved very fast in a lateral direction as seen in fig. 7, which works well for a glass panel.
In fig. 7a) it is seen that the touch screen 703 is attached to a fixed frame 727 of the electronic device by means of e.g. a gasket 728 or another flexible means. Thus the touch screen 703 can move in e.g. the gasket 728. A piezo element 729 is fixed to both the fixed frame 727 and to the screen 703. The piezo element 729 is fixed to the screen at a region 730 indicted by a black area, and to the fixed frame at a region 731 also indicated by a black area. Thus when the piezo element is set in lateral motion, the screen 703 is moved relative to the fixed frame in a direction indicted by the double arrow line 732. The piezo element 729 may be a piezo patch transducer.

Fig. 7b) shows the same as fig. 7a), except that in fig. 7b) the piezo element 729 is fixed askew relative to the fixed frame 727 and the screen 703. Thus when the piezo element is set in lateral motion, the screen 703 is moved relative to the fixed frame in a direction indicted by the double arrow line 733. The piezo element 729 may be a piezo bender.

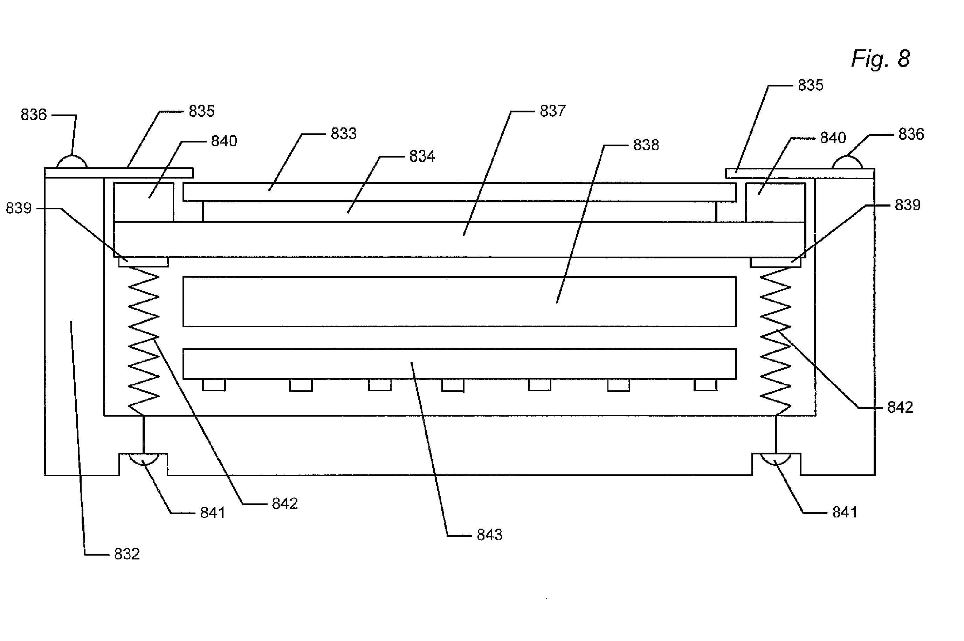

Fig. 8 shows an example of an electronic touch screen device seen in side view.
The electronic touch screen device comprises a casing 832 and a cover glass 833. A capacitive touch sensor 834 is arranged under the cover glass 833. A metal cover plate 835 reaches across part of the cover glass 833 and is fixed to the casing 832 by means of screws 836. A clear plastic plate 837 is arranged under the capacitive touch sensor 834, and a display 838 is arranged in the centre under the clear plastic plate 837. A frame 840 is arranged along the sides above the clear plastic plate 837, and the frame may be made of cellular polyurethane. Force resistive sensors 839 are arranged in the sides or in the corners under the clear plastic plate 837. The resistive force sensors 839 are attached with force resistive sensor pre-load adjustment screws 841 in the bottom of the casing 832 by means of for example springs 842. A printed circuit board or printed wire board 843 is arranged under the display 838.

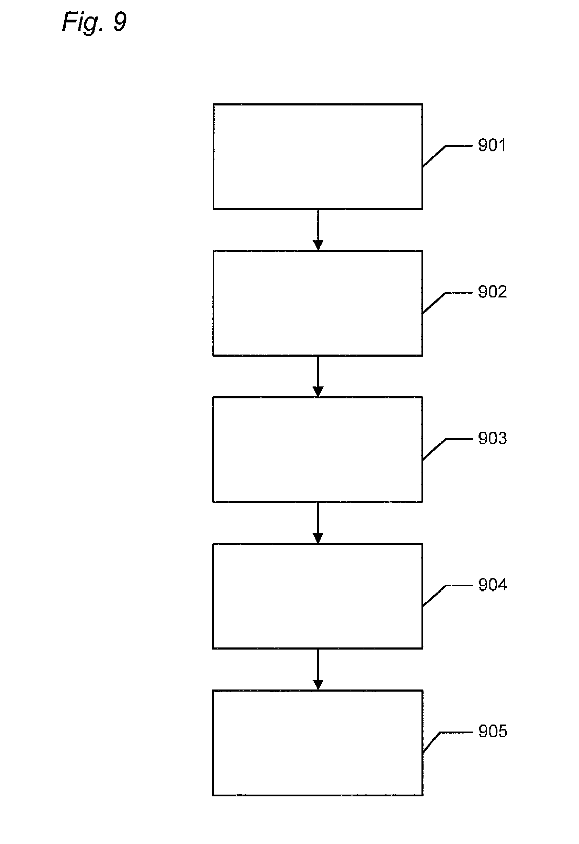

Fig. 9 shows an example of a flowchart.
The figure shows a flowchart showing a method performed by a processing unit in the electronic device, the method comprises the steps of:
In step 901 a position of a first touch action at time t1 is detected.
In step 902 a position of a second touch action at time t2 is detected.
In step 903 a pressure action at time t3 is detected.
In step 904 it is calculated whether the pressure action corresponds to the first or the second touch action.
In step 905 the input to the electronic device is registered based on the pressure action.
Thus in this situation the first and the second touch action are not performed at the same time.

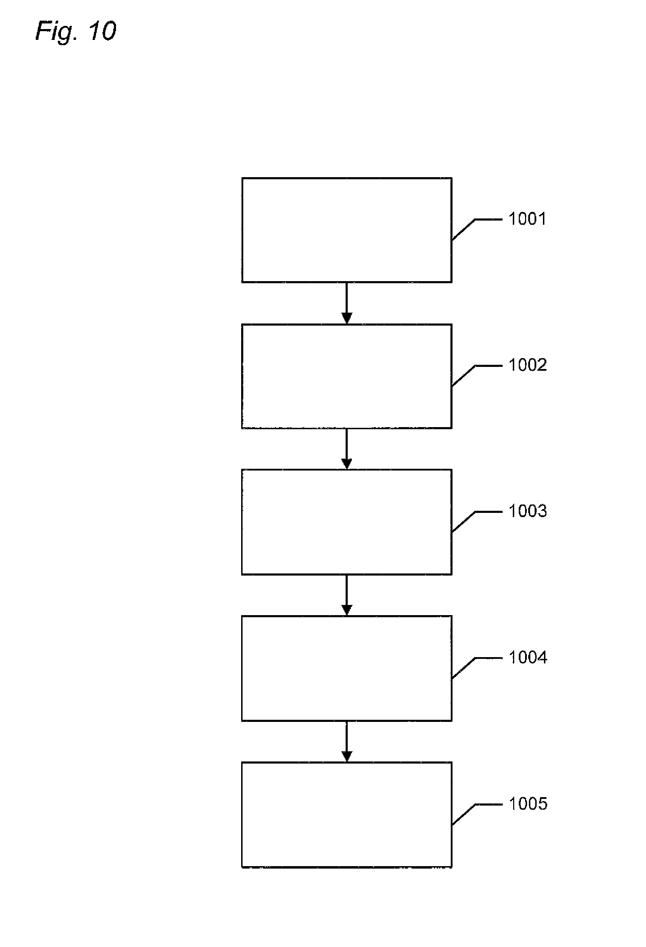

Fig. 10 shows an example of a flowchart.
The figure shows a flowchart showing a method performed by a processing unit in the electronic device, the method comprises the steps of:
In step 1001 a position of a first touch action at time t1 is detected.
In step 1002 a position of a second touch action at time t1 is detected.
In step 1003 a pressure action at time t3 is detected.
In step 1004 it is calculated whether the pressure action corresponds to the first or the second touch action.
In step 1005 the input to the electronic device is registered based on the pressure action.
Thus in this situation the first and the second touch action are performed at the same time.

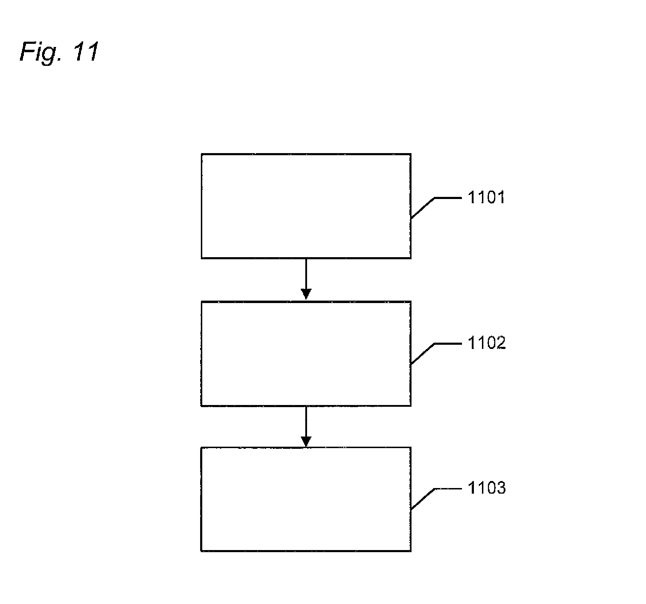

Fig. 11 shows an example of a flowchart.
The figure shows a flowchart showing a method performed by a processing unit in the electronic device, the method comprises the steps of:
In step 1101 a position of a first touch action at time t1 is detected.
In step 1102 a pressure action at time t2 is detected.
In step 1103 the input to the electronic device is registered based on the pressure action.
Thus in this situation only one touch action is performed prior to the pressure action, and thus the pressure action can only be performed at the same position as the first touch action.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. An electronic device comprising:
- a touch screen configured for presenting information to a user and for receiving input controlled by the user;
- at least one touch sensor configured for detecting the position of at least one touch action made by the user on the touch screen;
- at least two force sensors configured for detecting at least one pressure action made by the user on the touch screen subsequent to the at least one touch action, and where the at least one pressure action is registered as an input to the electronic device; and
- a processing unit configured for calculating which of a position of a first touch action, of the at least one touch action, and a position of a second touch action, of the at least one touch action, that a first pressure action, of the at least one pressure action, corresponds to, if the first touch action and the second touch action are present at the touch screen substantially simultaneously, and the first pressure action is detected subsequently; and the processing unit is furthermore configured to deduce which input to register in the electronic device based on the first pressure action.

2. An electronic device according to claim 1, wherein the touch screen is configured for presenting information by displaying a number of objects, where each object corresponds to an input controllable by the user.

3. An electronic device according to any of claims 1-2, wherein a touch action corresponds to that the user rests a pointing means on the touch screen.

4. An electronic device according to any of claims 1-3, wherein the first touch action corresponds to that the user rests a first pointing means on the touch screen, and where the second touch action corresponds to that user rests a second pointing means on the touch screen.

5. An electronic device according to any of claims 1-4, wherein the position of the at least one touch action is defined by means of a x-position,̅ a y-position and a z-position in a coordinate system relative to the touch screen.

6. An electronic device according to any of claims 1-5, wherein if a second pressure action of the at least one pressure action is detected subsequently, the processing unit calculates which of the position of the first touch action and the position of the second touch action the second pressure action corresponds to; and the processing unit deduces which input to register in the electronic device based on the second pressure action.

7. An electronic device according to any of claims 1-6, wherein if a second pressure action of the at least one pressure action is detected simultaneously with the first pressure action, the processing unit in the electronic device calculates which of the position of the first touch action and the position of the second touch action the second pressure action corresponds to; and the processing unit deduces which input to register in the electronic device based on the second pressure action.

8. An electronic device according to any of claims 1-7, wherein the processing unit calculates a force level of the at least one pressure action.

9. An electronic device according to claim 8, wherein the processing unit calculates a force level of each of the respective first and second pressure actions made simultaneously.

10. An electronic device according to any of claims 1-9, wherein the device is configured for generating a user-detectable output in the form of a haptic feedback, and where the haptic feedback simulates the sensation of a mechanical keypad.

11. An electronic device according to any of claims 1-10, wherein the device is configured for generating a user-detectable output in the form of a haptic feedback, and where the haptic feedback comprises providing a click-down sensation, when the pressure action is increased on the touch screen, and a click-up sensation, when the pressure action is decreased on the touch screen.

12. An electronic device according to any of claims 1-11, wherein the device is configured for generating a user-detectable output in the form of a haptic feedback, and where the haptic feedback is a sound wave motion adjusted to have its maximum amplitude at the position, where the pressure action is made.

13. A method of registering input in an electronic device comprising a touch screen configured for presenting information to a user and for receiving input controlled by the user, the method comprising the steps of:
- detecting, by means of at least one touch sensor, the position of at least one touch action made by the user on the touch screen;
- detecting, by at least two force sensors, at least one pressure action made by the user on the touch screen subsequent to the at least one touch action, where the at least one pressure action is registered as an input to the electronic device;
- calculating, by means of a processing unit, which of a first touch position and a second touch position a first pressure action corresponds to, if a first touch action and a second touch action are present at the touch screen substantially simultaneously, and the first pressure action is detected subsequently to the first and the second touch actions; and deducing, by means of the processing unit, which input to register in the electronic device based on the first pressure action.

14. A computer program product comprising program code means for causing a data processing system to perform the method of claim 14, when the program code means are executed on the data processing system.

15. A computer program product according to claim 14, comprising a computer-readable medium having stored thereon the program code means.
